# EUROPÄISCHE PATENTANMELDUNG

(11) **EP 2 055 462 A2**
(43) Veröffentlichungstag der Anmeldung: **06.05.2009**
(21) Anmeldenummer: 08166620.8
(22) Anmeldetag: 15.10.2008
(51) Int. Cl.: B29C 65/18, B29C 65/56

(54) **Verfahren zum Verschweißen von auf Gehrung geschnittenen Rahmenprofilen für Fenster, Türen oder dergleichen sowie Dichtungsstreifen zur Verwendung bei solchen Rahmenprofilen**

(30) Priorität: 30.10.2007 DE 102007051882
(71) Anmelder: Semperit Aktiengesellschaft Holding, 1031 Wien (AT)
(72) Erfinder: Lovrencic, Tihomir, 01705 Freital (DE)
(74) Vertreter: Bauer, Clemens

(57) **Zusammenfassung**

Bei aus thermoplastischen Rahmenprofilen und elastomerem bzw. gummielastischen Dichtungsstreifen zusammengesetzten Fenster-oder Türrahmen oder Fenster- bzw. Türflügel werden die in Eckbereichen (5) auf Gehrung geschnittenen Rahmenprofile (1) aufgeschmolzen und miteinander verschweißt; die in den Eckbereichen aus der Profilebene (PE) der Dichtstreifen (4) herausgedrängten Materialteile (4a, 4b) werden während des Zusammenpressens und Verschweißens der Rahmenprofile (1) in die Profilebene (PE) zurückgedrängt.

## Beschreibung

Die Erfindung bezieht sich auf ein Verfahren der im Oberbegriff des Anspruchs 1 genannten Gattung.

Ein derartiges Verfahren ist bereits bekannt (DE 199 35 076 A1 und DE 200 16 008 U1). Es erleichtert die Herstellung von beispielsweise Fensterrahmen oder Fensterflügeln, bei denen in die Rahmenprofile strangförmige Dichtstreifen eingesetzt sind, die zum Halten und Abdichten beispielsweise des Fensterglases oder zum Abdichten des Spalts zwischen Fensterrahmen und Flügelrahmen dienen. Während man früher die Dichtungsstreifen erst nach der Fertigstellung des Rahmens bzw. Flügelrahmens in die Rahmenprofile und zwar in dafür vorgesehene Schlitze oder Nuten eingefügt hat und dann gut darauf zu achten war, dass an den Ecken keine undichten Stellen entstehen, ist das nachträgliche Einsetzen der Dichtungsstreifen bei dem Verfahren der eingangs genannten Gattung überflüssig. Vielmehr erfolgt das Zusammensetzen des Rahmens an den auf Gehrung geschnittenen Stirnenden der Rahmenprofile nach dem vorherigen Einsetzen von Dichtungsstreifen in die betreffenden Rahmenprofilschlitze.

Der Erfindung liegt die Aufgabe zugrunde, die Bildung undichter Stellen oder nicht so gut abdichtender Stellen in den Eckbereichen auf einfache verfahrenstechnische Weise zu vermeiden.

Die Erfindung ist in Patentanspruch 1 gekennzeichnet und weitere Ausbildungen sind in Unter- und Nebenansprüchen beansprucht.

Anhand der Zeichnungen und nachfolgenden Figurenbeschreibung sind besonders bevorzugte Ausbildungsformen der Erfindung beschrieben.

Da das Dichtungsstreifenmaterial bei der Schmelztemperatur des thermoplastischen Rahmenprofilmaterials nicht aufschmilzt, neigen die Enden der Dichtungsstreifen im Gehrungsbereich beim Aufschmelzen und Zusammendrücken der Stirnflächen der Rahmenprofile dazu, über die Profilebene des betreffenden Dichtungsstreifens hinauszuragen, sofern sie nicht, wie beispielsweise beim eingangs genannten Stand der Technik oder der DE 196 44 183 A1, mittels zusätzlicher Elemente vorübergehend zurückgezogen werden. Aufgrund der Schweißraupen des verschmolzenen Materials der Rahmenprofile in den Eckbereichen ergeben sich "Schwachstellen" hinsichtlich der Dichtungswirkung, die jedoch bei dem erfindungsgemäßen Verfahren vermieden oder weitgehend vermindert werden. Zu diesem Zweck werden die über die Profilebene hinausgedrückten Teile der Dichtungsstreifen während des Zusammenpressens und Verschweißens der Rahmenprofile insbesondere durch einen an die entsprechende Außenkontur der Dichtungsstreifen angepassten Pressstempel zurückgedrückt bzw. niedergedrückt. Der Dichtungsstreifen besteht dabei bevorzugt aus einem 2-Komponenten Material, beispielsweise aus EPDM und EPDM in unterschiedlichen Härtegraden oder aus EPDM und einem offen- oder geschlossenzelligem elastomeren oder einem gummielastischem Material. Durch die Verwendung des 2-Komponenten Materials wird sichergestellt, dass im späteren Eckbereich der abzudichtenden Profile, wie beispielsweise im Fenstereckbereich, eine optimale Verbindung der Dichtung entsteht.

Die durch das Zurückdrücken innerhalb des Dichtungsstreifens an dessen Enden entstehenden Kraft wirkt dort der Kraft des aufgeschmolzenen bzw. flüssig gewordenen thermoplastischen Rahmenprofilmaterials entgegen. Im Ergebnis kann dann nach dem Erkalten der aufgeschmolzenen Rahmenprofilteile der Dichtungsstreifen auch an seinem Ende - in den Eckbereichen - seine Dichtungsaufgabe besser erfüllen, ohne dass dort entstandene Schweißraupen des thermoplastischen Materials stören.

Im Rahmen dieses erfindungsgemäßen Verfahrens oder auch unabhängig davon, empfiehlt es sich, solche Dichtungsstreifen zu verwenden, die im Bereich ihrer Abstützflächen an den Rahmenprofilen mindestens eine Aussparung aufweisen und/oder dort aus sehr weichem Material hergestellt werden, so dass aufschmelzendes thermoplastisches Kunststoffmaterial der Rahmenprofile dort ausweichen kann, ohne die endgültige Abdichtungsfunktion der Dichtungsstreifen in den Eckbereich zu beeinträchtigen.

Dabei empfiehlt es sich, die Aussparungen bzw. das sehr weiche und leicht zusammenpressbare Dichtungsstreifenmaterial vor allen benachbart zu Verankerungsteilen der Dichtstreifen anzuordnen, die zum Verankern in Verankerungsschlitzen oder -nuten der Rahmenprofile dienen.

### In der Zeichnung zeigen:

- Fig. 1: ein schematisches Schnittbild auf eine Ecke eines rechteckförmigen Fensterrahmens;
- Fig. 2-4: schematische Aufsichten auf eine solche Rahmenecke im Verlaufe des Verschmelzungsverfahrens benachbarter Rahmenprofile;
- Fig. 5: eine schematische Aufsicht auf den Eckbereich des Rahmens nach dem Verschmelzen der auf Gehrung geschnittenen und an den Stirnseiten verschmolzenen Rahmenprofile;
- Fig. 6,: 7, 8 und 9 bevorzugte Ausbildungen von Dichtungsstreifen, wie sie beim Herstellen des Rahmens durch Verschmelzen der thermoplastischen Rahmenprofile bevorzugt Verwendung finden.

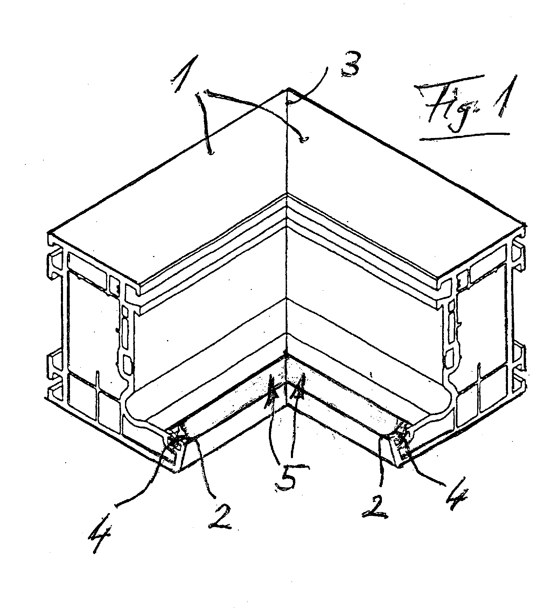

Gemäß Fig. 1 sind zwei Rahmenprofile 1, in denen Verankerungsschlitze 2 und Dichtungsstreifen 4 eingesetzt sind, an den auf Gehrung geschnittenen Stirnenden 3, d.h. an den Ecken, miteinander verschmolzen. Dabei sind die Eckbereiche 5 der Dichtungsstreifen 4 für die Dichtungsfunktion derselben besonders wichtig; deren Dichtungsfunktion soll bei der Erfindung trotz des Verschmelzens der Rahmenprofile 1 an den Ecken nicht beeinträchtigt werden.

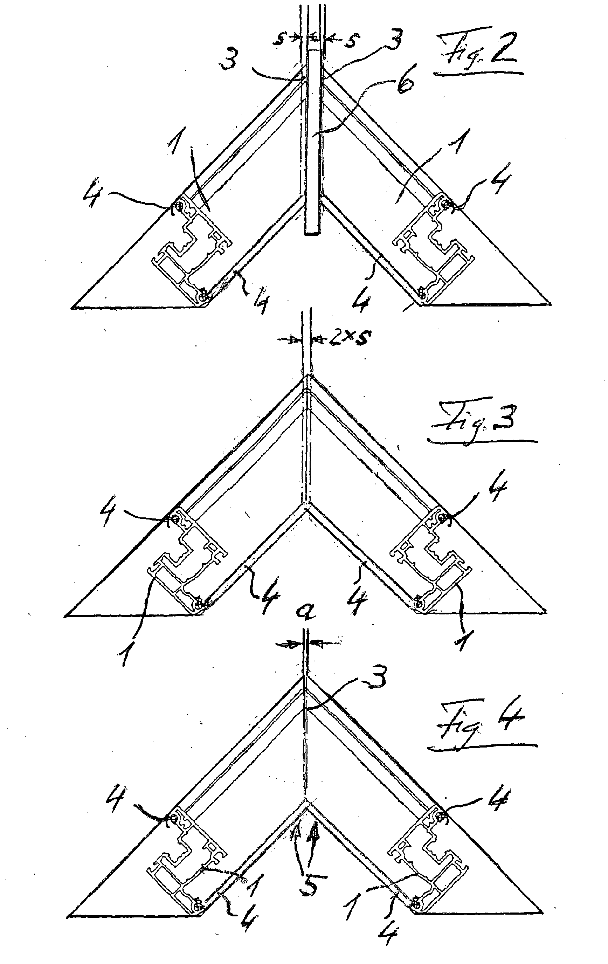

Gemäß Fig. 2 sind zwei Rahmenprofile 1 aus thermoplastischem Material, insbesondere PVC, mit eingesetzten Dichtungsstreifen 4 aus elastomerem bzw. gummielastischem Material, insbesondere EPDM und/oder Schaumstoff bzw. Moosgummi eingesetzt. Zwischen die Stirnflächen 3 an den Enden der Rahmenprofile 1 ist gemäß Fig. 2 ein Erhitzungswerkzeug 6 vorübergehend eingefügt, welches die Stirnbereiche mit der Dicke s zum Schmelzen bringt.

Nach Entnahme des Erhitzungswerkzeugs 6 werden die beiden Rahmenteile 1 gemäß Fig. 3 zusammengedrückt, so dass die erhitzten Materialteile mit der Wanddicke s miteinander verschmelzen. Durch die Kraft des Zusammendrückens vermindert sich die Dicke des Eckbereichs an den Stirnflächen 3 gemäß Fig. 4 auf den Verschmelzungsbereich a der z.B. etwa 0,1 bis 0,4 mm beträgt. Dabei wird aufgeschmolzenes Material auch aus dem Profilbereich der Rahmenprofile 1 im Bereich der Enden der Dichtungsstreifen 4 als so genannte "Schweißraupe" hinausgedrückt, was zu einer Verminderung der Abdichtungsfunktion der Dichtungsstreifen 4 im den Eckbereich 5 insbesondere der Innenecken Anlass gibt.

Während nach dem Stand der Technik beim Verschweißen der Rahmenprofile 1 dafür Sorge getragen wird, dass die Dichtungsstreifen 4 in deren Längsrichtung etwas zurückgezogen werden, wird bei dem erfindungsgemäßen Verfahren diese verfahrenstechnisch aufwändige Maßnahme nicht ergriffen. Vielmehr wird einfach ein Stempel auf die Eckbereiche 5 der Dichtstreifen 4 so weit aufgesetzt, dass die über die Profilebene PE hervorstehenden Zipfel 4a der Enden der Dichtstreifen 4 bzw. auf schlitzförmige Öffnungen 4b zusammengedrückt werden. Hierdurch wird dem Drang des plastifizierten Rahmenprofilmaterials eine Kraft entgegengesetzt, so dass dieses plastifizierte Material weniger stark in den für die Dichtungsstreifen 4 vorgesehenen Freiraum eindringen kann. Nach dem Verfestigen des aufgeschmolzenen Materials hat die Dichtungsfunktion der Dichtungsstreifen 4 auch in dem Eckbereich 5 wieder praktisch ihre volle Qualität erreicht.

Durch die Verwendung eines 2-Komponenten Materials für den Dichtungsstreifen wird sichergestellt, dass eine optimale Verbindung, insbesondere in Eckbereichen, entsteht. Durch die Verwendung einer Kombination aus EPDM und offen- oder geschlossenzelligem elastomeren oder gummielastischem Material können aufgrund der schaumstoffähnlichen Qualität einfache Stempel für insbesondere die Eckbereiche verwendet werden, wodurch sich die Anwendung der Erfindung weiter vereinfacht.

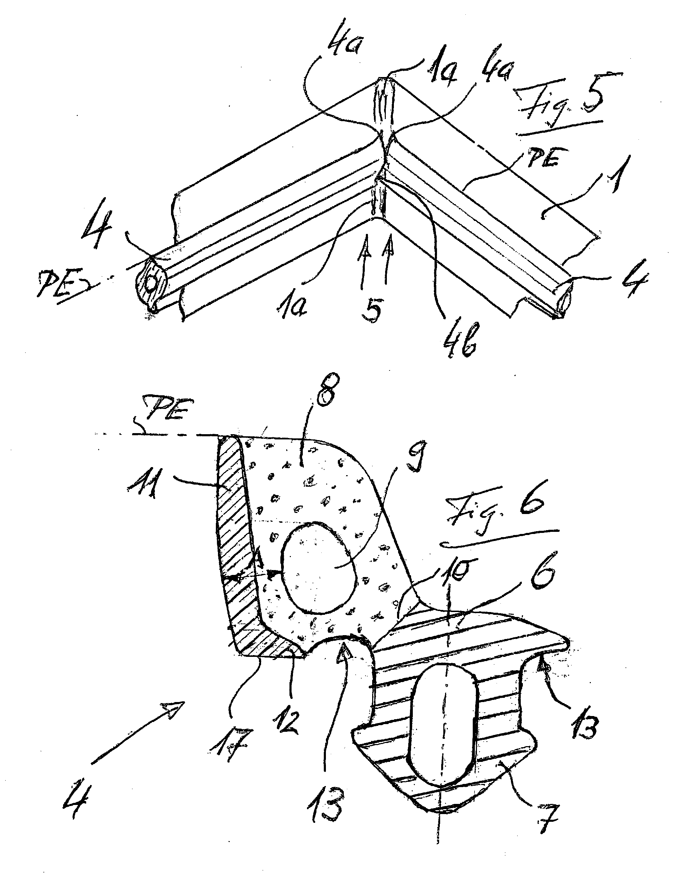

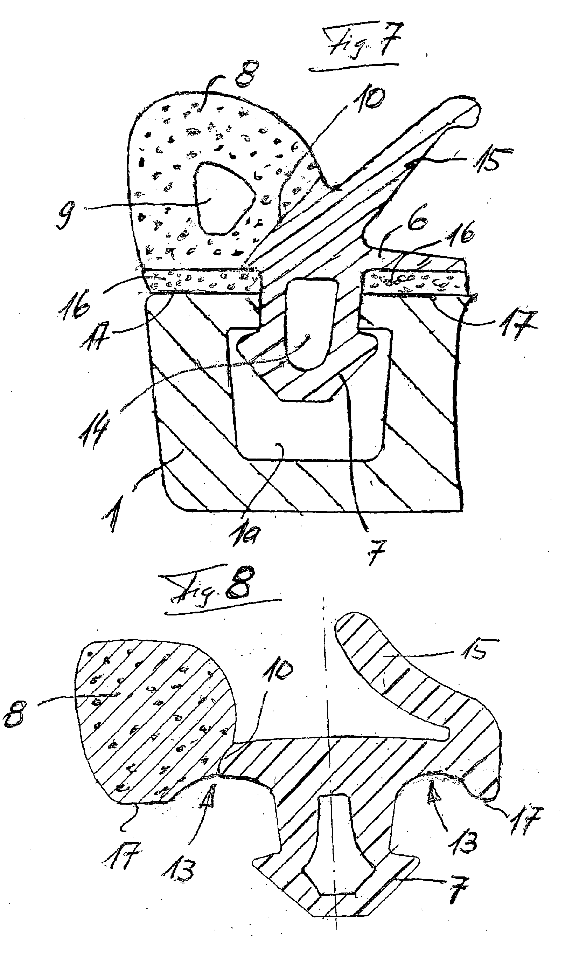

Besonders bevorzugt werden Dichtungsstreifen 4 verwendet, die im Profil in Fig. 6 schematisch dargestellt sind. Dabei setzt sich an einen Basisteil 6 ein Verankerungsteil 7 an, mit dem der Dichtungsstreifen 4 in der Verankerungsnut 1a des Rahmenprofils 1 beispielsweise gemäß Fig. 7 einsetzbar und dort verankerbar ist. Das beispielsweise aus EPDM bestehende Material des Basisteils 6 und des Verankerungsteil 7 reicht bis zur Grenzfläche 10; an der anderen Seite dieser Grenzfläche 10 setzt sich die Dichtlippe 8 fort, welche aus insbesondere zellförmigem Schaumstoff oder Gummi mit einem größeren Hohlraum 9 besteht. An diese Dichtlippe 8 schließt sich nach außen zur Wetterseite hin ein Randteil 11 aus härterem Material an, so dass die Dichtlippe 8 auch aus offenzelligem Material hergestellt werden kann. Der Randteil 11 weist insbesondere ein L-förmiges Profil auf, von dem der kurze Schenkel 12 zwischen der Abstützfläche 17 und dem zelligen Material der Dichtlippe 8 gewissermaßen eingeklemmt wird.

Erfindungsgemäß weist der Dichtungsstreifen 4 von der Abstützfläche 17 ausgehend insbesondere gerundete Aussparungen 13 auf. In diese Aussparungen 13 kann beim Verschmelzen der Stirnflächen 3 der Rahmenprofile 1 jedenfalls ein Teil des Schmelzmaterials eindringen, ohne dass die Dichtungsfunktion der Dichtungsstreifen 4 insbesondere deren Dichtlippen 8 beeinträchtigt wird. Diese Aussparungen 13 bilden eine Art "Reservoir" zur Aufnahme aufgeschmolzenen thermoplastischen Rahmenprofilmaterials.

Gemäß Fig. 7 weist der Dichtungsstreifen 4 keine solchen Aussparungen 13 auf; stattdessen ist dort ein streifenförmiges Material 16 zwischen Abstützfläche 17 und der Dichtlippe 8 bzw. dem Basisteil 6 und der weiteren Dichtlippe 15 eingebracht. Dieses sehr weiche Material 16 wird beim Aufschmelzen und Zusammendrücken der Rahmenprofile 1 in den Eckbereichen etwas zusammengedrängt, ohne dass hierdurch die Dichtfunktion der Dichtlippe 8 oder der weiteren Dichtlippe 15 merklich beeinträchtigt wird. Auch bei diesen Beispielen ist der Verankerungsteil 7 mit einem größeren Hohlraum 14 versehen, um das Eindrücken des Verankerungsteils 7 in die Verankerungsnut 1a zu erleichtern.

Bei der Dichtungsstreifenversion von Fig. 8 sind gleichfalls Aussparungen 13 als Reservoir zur Aufnahme aufgeschmolzenen Kunststoffmaterials der Rahmenteile 1 in den Eckbereichen vorhanden. Diese Ausbildung ist lediglich ein weiteres Beispiel für die Vielfalt von Dichtungsstreifen mit einem oder mehreren Dichtungslippen 8, 15 und deren Materialteilen.

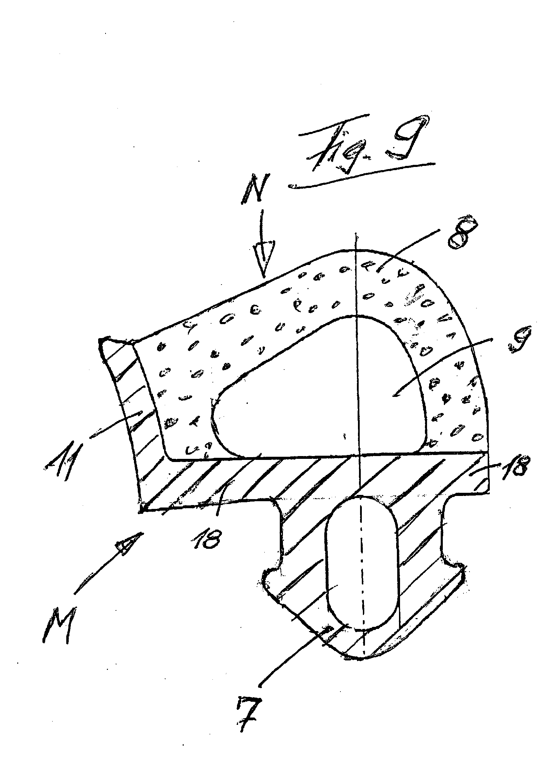

Der Dichtungsstreifen von Fig. 9 besteht aus zwei unterschiedlichen Materialteilen, dem Teil M aus z.B. EPDM und dem eigentlichen Dichtungsteil N, der Dichtlippe 8, aus z.B. offen- oder geschlossenzelligem elastomeren oder gummielastischen Material. Dabei weist die Dichtlippe 8 einen großen Hohlraum 9 im Querschnitt auf. Der Teil M umfasst den Verankerungsteil 7 (Ankerfuß), den zur Wetterseite weisenden Randteil 11 und den Verbindungsteil 18 zwischen Verankerungsteil 7 und Randteil 11. Auf dem Verbindungsteil 18 und dem Randteil 11 ist die Dichtlippe 8 aufgebaut.

Die zwei unterschiedlichen Materialteile M und N können sowohl aus EPDM unterschiedlicher Härtegrade, als auch aus einer Kombination aus EPDM und offen- oder geschlossenzelligem elastomeren oder gummielastischen Material bestehen. Die Dichtungen aus dem 2-Komponenten Material werden dann in dem entsprechenden Trägermaterial, beispielsweise bestehend aus Aluminium, Holz, PVC oder deren Verbundarten zur Herstellung von Baumaterial, wie z.B. Fenster, Türen, Fassadenelementen oder Ähnliches, befestigt.

Es versteht sich, dass die Rahmenprofile nicht nur durch "Schneiden", sondern auch auf andere Weise auf Gehrung gebracht werden können.

## Patentansprüche

1. Verfahren zum Verschweißen von auf Gehrung geschnittenen Rahmenprofilen (1) für Fenster, Türen oder dergleichen, bei dem Dichtungsstreifen (4) aus elastomerem bzw. gummielastischem Material an und/oder in den Rahmenprofilen (1) befestigt und die auf Gehrung geschnittenen Stirnflächen (3) der aus thermoplastischem Material bestehenden Rahmenprofile (1) erhitzt und aufgeschmolzen werden, dass die Rahmenprofile (1) mit den aufgeschmolzenen Stirnflächen (3) bis zum Verschweißen zusammengepresst werden und dass Dichtungsstreifen (4) verwendet werden, die bei den Aufschmelztemperaturen der Rahmenprofile (1) nicht aufschmelzen,
**dadurch gekennzeichnet,**
**dass** die sich beim Zusammenpressen der aufgeschmolzenen Stirnflächen (3) der Rahmenprofile (1) über die Profilebene (PE) hinausstehenden Teile (4a) der Dichtungsstreifen (4) während des Zusammenpressens und Verschweißens der Rahmenprofile (1) im Gehrungsbereich in die Profilebene (PE) zurückgedrückt werden.

2. Verfahren nach Anspruch 1, **dadurch gekennzeichnet, dass** das Zusammendrücken durch einen Pressstempel vorgenommen wird.

3. Verfahren nach Anspruch 2, **dadurch gekennzeichnet, dass** ein dem Profil der Dichtungsstreifen (4) in entsprechenden Außenkonturen angepasster Pressstempel verwendet wird.

4. Verfahren zum Verschweißen von auf Gehrung geschnittenen Rahmenprofilen (1) für Fenster, Türen und dergleichen, bei dem Dichtungsstreifen (4) aus elastomerem bzw. gummielastischem Material an und/oder in den Rahmenprofilen (1) befestigt und die Rahmenprofile (1) aus thermoplastischem Material an den auf Gehrung geschnittenen Stirnflächen (3) erhitzt und aufgeschmolzen werden, dass die Rahmenprofile (1) mit den aufgeschmolzenen Stirnflächen bis zum Verschweißen zusammengepresst werden und dass Dichtungsstreifen (4) verwendet werden, die bei den Aufschmelztemperaturen der Rahmenprofile (1) nicht aufschmelzen, insbesondere nach einem der vorhergehenden Ansprüche,
**dadurch gekennzeichnet,**
**dass** Dichtungsstreifen (4) verwendet werden, die im Bereich ihrer Abstützflächen (17) an den Rahmenprofilen (1) Aussparungen (3) aufweisen.

5. Verfahren nach Anspruch 4, **dadurch gekennzeichnet, dass** Dichtungsstreifen (1) verwendet werden, bei denen sich die Aussparungen (3) benachbart zu Verankerungsteilen (7) der Dichtungsstreifen (4) befinden, die zum Verankern in Verankerungsschlitzen (1a) der Rahmenprofile (1) dienen.

6. Verfahren zum Verschweißen von auf Gehrung geschnittenen Rahmenprofilen (1) für Fenster, Türen oder dergleichen, bei dem Dichtungsstreifen (4) aus elastomerem bzw. gummielastischem Material an und/oder in den Rahmenprofilen (1) befestigt und die auf Gehrung geschnittenen Stirnflächen (3) der aus thermoplastischem Material bestehenden Rahmenprofile (1) erhitzt und aufgeschmolzen werden, dass die Rahmenprofile (1) mit den aufgeschmolzenen Stirnflächen (3) bis zum Verschweißen zusammengepresst werden und dass Dichtungsstreifen (4) verwendet werden, die bei den Aufschmelztemperaturen der Rahmenprofile (1) nicht aufschmelzen, insbesondere nach einem der vorhergehenden Ansprüche,
**dadurch gekennzeichnet,**
**dass** Dichtungsstreifen (4) verwendet werden, die im Bereich ihrer Arbeitsflächen (17) an dem Rahmenprofil (1) ein von geschmolzenem Material desselben leicht verdrängbares Material (16) aufweisen.

7. Verfahren nach Anspruch 6, **dadurch gekennzeichnet, dass** Dichtstreifen (4) verwendet werden, die im Bereich ihrer Abstützflächen (17) an den Rahmenprofilen (1) ein sehr weiches Material (16) mit einer Härte im Bereich von 20 Shore bis 50 Shore aufweisen.

8. Dichtungsstreifen zur Verwendung beim Verschmelzen von thermoplastischen Rahmenprofilen (1) für Fenster, Türen oder dergleichen an ihrer auf Gehrung geschnittenen Stirnfläche (3),
**dadurch gekennzeichnet,**
**dass** im Bereich der Abstützflächen (17) an den Rahmenprofilen (1) ein von geschmolzenem Material derselben leicht verdrängbarem, insbesondere sehr weiches Material (16) angeordnet ist.

9. Dichtungsstreifen nach Anspruch 8, **dadurch gekennzeichnet, dass** das leicht verdrängbare Material (16) mit dem übrigen Dichtstreifenmaterial im Koextrusionsverfahren an diesem appliziert ist.

10. Dichtungsstreifen nach Anspruch 8 oder 9, **dadurch gekennzeichnet, dass** der Dichtungsstreifen einen Dichtungsteil (N) und einen Verankerungsteil (7) aufweist, wobei beide Teile entweder aus EPDM unterschiedlicher Härtegrade oder der Verankerungsteil (7) aus EPDM und der Dichtungsteil (N) aus einem offen- oder geschlossenzelligem elastomeren oder gummielastischen Material bestehen.
